# EUROPÄISCHE PATENTSCHRIFT

(11) **EP 3 604 797 B1**
(45) Veröffentlichungstag und Bekanntmachung des Hinweises auf die Patenterteilung: **07.09.2022**
(21) Anmeldenummer: 19186647.4
(22) Anmeldetag: 16.07.2019
(51) Int. Cl.: F03D 1/06, B29C 70/30, B29C 70/52, B29D 99/00

(54) **VERJÜNGTER PULTRUDATGURT UND EIN VERFAHREN ZU SEINER HERSTELLUNG**
TAPERED PULTRUDATE BELT AND METHOD FOR PREPARATION THEREOF
BANDE DE PRODUIT DE PULTRUSION RÉTRÉCIE ET SON PROCÉDÉ DE FABRICATION

(30) Priorität: 02.08.2018 DE 102018006085
(43) Veröffentlichungstag der Anmeldung: 05.02.2020
(73) Patentinhaber: Siemens Gamesa Renewable Energy Service GmbH, 20097 Hamburg (DE)
(72) Erfinder: Eyb, Enno, 24116 Kiel (DE)
(74) Vertreter: Groth, Wieland

(56) Entgegenhaltungen:
- EP-A2- 2 341 239
- WO-A2-2010/034283
- DE-A1-102008 007 304
- US-A1- 2011 187 115

## Beschreibung

Die Erfindung betrifft ein Rotorblatt mit einem Gurt mit einer Mehrzahl an Pultrudatlagen mit jeweils einer Länge und Breite, einem Tip und einer Rotorblattwurzel. Die Erfindung betrifft auch ein Verfahren zur Herstellung eines Rotorblattes mit einem Gurt.

Rotorblätter sind insbesondere als Bauteile von Windkraftanlagen im Stand der Technik natürlich hinlänglich bekannt.

Rotorblätter bestehen gemäß der EP 2 778 393 A2 üblicherweise aus zwei Halbschalen, die an ihren Rändern miteinander verklebt werden. Im Inneren des Rotorblattes sind sich gegenüberliegend zwei Gurte angeordnet, die mit einem Hauptsteg verbunden sind. Es ist auch denkbar, dass neben dem Gurt nasenseitig und rotorblatthinterkantenseitig weitere Gurte mit zugehörenden Stegen angeordnet sind. Üblicherweise bestehen die Gurte, insbesondere die Gurte aus mehreren Pultrudatlagen, die auf die Innenseite der Rotorblattschale auflaminiert werden. Die Pultrudatlagen sind aus Kostengründen im Wesentlichen baugleich. Da sich das Rotorblatt zum Tip hin verjüngt, werden die Pultrudate sich in Längsrichtung verjüngend abgesägt. Die auf diese Weise hergestellten Gurte sind relativ materialaufwendig und statisch nicht optimal hergestellt, da sie in ihrem Tipbereich zu materialhaltig sind.

In der WO 2010/034283 A2 ist ein Rotorblatt mit einem Gurt beschrieben, dessen Breite zum Tip stufenförmig abnimmt und der auf die Innenseite der Rotorblatthalbschale abstehend auflaminiert ist.

In der DE 10 2008 007 304 A1 ist ein Rotorblatt für eine Windenergieanlage beschrieben, mit einem innenseitig auf die Rotorblatthalbschale aufgebrachten Gurt, der innenseitig in den Rotorblattraum-Innenraum absteht.

In der EP 2 341 239 A1 ist ein Steg für eine Windkraftanlage offenbart.

Es ist die Aufgabe der vorliegenden Erfindung, ein eingangs genanntes Rotorblatt zur Verfügung zu stellen, das einen Gurt aufweist, der die oben genannten Nachteile vermindert.

Es ist auch Aufgabe der Erfindung, ein eingangs genanntes Verfahren zur Verfügung zu stellen, mit dem das Rotorblatt mit einem Gurt herstellbar ist und dass die oben genannten Nachteile vermindert.

Die Aufgabe kann überraschenderweise durch ein eingangs genanntes Rotorblatt mit einem Tip und einer Rotorblattwurzel gelöst werden, bei dem ein Gurt aus mehreren Pultrudatlagen aufgebaut ist und schmalere Pultrudatlagen in einer Längsrichtung dichter an den Tip heranreichen als breitere Pultrudatlagen.

Dabei bezeichnet die schmalere Pultrudatlage eine Breite der Pultrudatlage, die schmaler ist als die Breite der breiteren Pultrudatlage. "Breiter" und "schmaler" beziehen sich auf die Breiten der Pultrudatlagen in ihrem relativen Verhältnis.

Es hat sich gezeigt, dass es für die Gurte eines Rotorblattes vorteilhaft ist, wenn ein Verhältnis von Breite zu Dicke des Gurtes sich über die gesamte Längsausdehnung des Gurtes innerhalb vorgegebener Grenzwerte bewegt, möglichst sogar gleich bleibt. Die Längsrichtung entspricht der Längsrichtung des Rotorblattes und die Längsausdehnung verläuft entlang der Längsrichtung. Die Breite verläuft senkrecht zur Längsrichtung.

Der Gurt ist an der Rotorblattwurzel besonders breit und dünn in einem aerodynamischen mittleren Abschnitt ist der Gurt sowohl breit als auch dick und er verjüngt sich zum Tip hin und sollte auch gleichzeitig dünner werden.

Das erfindungsgemäße Rotorblatt löst dieses Problem einfach, indem ein Gurt mit einer Mehrzahl an Pultrudatlagen zur Verfügung gestellt wird und in Richtung des Tips des Rotorblattes, also im Tipbereich des Rotorblattes, breitere Pultrudatlagen in einer Längsrichtung kürzer als schmalere Pultrudatlagen ausgebildet sind. Die Erfindung macht von der Idee Gebrauch, Pultrudatlagen unterschiedlicher Breite und Länge übereinander anzuordnen und so in Richtung des Tips eine Verjüngung und Verdünnung auszuformen.

Grundsätzlich eignen sich Pultrudate, weil sie nur wenig biegsam sind, zur Ausbildung von Gurten.

Vorzugsweise reichen entgegen der Längsrichtung zur Rotorblattwurzel hin breitere Pultrudatlagen dichter an die Rotorblattwurzel heran als schmalere Pultrudatlagen.

Grundsätzlich ist die Biegesteifigkeit, die durch die Gurte erhöht wird, an der Rotorblattwurzel ohnehin hoch, so dass im Bereich der Rotorblattwurzel nur dünne Gurte erforderlich sind, während in Richtung des Tips die Verjüngung geometrisch erzwungen wird.

Günstigerweise weist jede Pultrudatlage über ihre gesamte Ausdehnung eine konstante Länge und eine konstante Breite auf. Eine Pultrudatlage, die breiter als eine andere Pultrudatlage ausgebildet ist, ist vorzugsweise auch kürzer als die andere Pultrudatlage ausgebildet.

Dabei wird vorzugsweise zur Ausbildung eines Gurtes zunächst eine maximale Anzahl an Pultrudatlagen übereinandergestapelt, während vorzugsweise die breiteren Pultrudatlagen rotorblattaußenseitig angeordnet sind und sukzessive schmalere oder höchstens gleichbreite Pultrudatlagen rotorblattinnenseitig auf der rotorblattaußenseitigen Pultrudatlage aufgelegt werden. Es entsteht in vorzugsweise jedem Querschnitt eine stufenpyramidenförmige Form. In Längsrichtung zum Tip sind die Pultrudatlagen unterschiedlich lang. Erfindungsgemäß sind die breiteren Pultrudatlagen kürzer als die schmaleren Pultrudatlagen. Dadurch verlaufen die schmaleren Pultrudatlagen dichter in Längsrichtung an den Tip heran. Somit ist es möglich, einen Gurt zur Verfügung zu stellen, der in Richtung des Tips schmaler und dünner wird.

Im Bereich der Rotorblattwurzel sind die inneren und schmaleren Pultrudatlagen kürzer als die äußeren und breiteren Pultrudatlagen.

Günstigerweise sind in jedem Querschnitt des Rotorblattes die rotorblattaußenseitigen Pultrudatlagen des Gurtes breiter als die rotorblattinnenseitigen Pultrudatlagen des Gurtes. Die Aussagen zur Breite beziehen sich immer auf einen Querschnitt senkrecht zur Längsrichtung des Gurtes bzw. des Rotorblattes.

Günstigerweise ist die Anordnung der Pultrudatlagen so aufgebaut, dass die Pultrudatlagen in einem Querschnitt, vorzugsweise jedem Querschnitt desto schmaler werden oder höchstens die gleiche Breite aufweisen, je rotorblattinnenseitiger sie angeordnet sind, d. h. innen sind die schmaleren, außen die breiteren Pultrudatlagen angeordnet, so dass ein Gurt entsteht, der in einem Querschnitt eine im Wesentlichen treppenpyramidenförmige Form aufweist. Diese Form trägt insbesondere der Belastung des Gurtes Rechnung, da die maximalen Lasten des Gurtes rotorblattaußenseitig auftreten, wo der Gurt auch am breitesten ausgebildet ist, und je weiter man zur Mittelsehne des Rotorblattes gelangt, desto geringer sind die Lasten, die auf den Gurt wirken. Dort wird der Gurt auch schmaler.

Vorzugsweise sind Querkanten der Pultrudatlagen entlang ihrer Dicke angeschrägt. Die Länge ändert sich dann entlang der Dicke des Pultrudates. Unter Querkante wird hier die senkrecht oder unter einem Winkel zur Längsrichtung verlaufende Kante der Pultrudatlage verstanden, die die Pultrudatlage zum Tip oder zur Rotorblattwurzel hin abschließt.

Dadurch können die inneren und längeren Pultrudatlagen stufenlos über die Querkante verlegt werden. Die inneren Pultrudatlagen sind weich und mit geringer Krümmung über die angeschrägte Querkante geführt.

Vorzugsweise sind tipseitige Querkanten der Pultrudate senkrecht zur Längsrichtung angeordnet. Sie können auch entlang der Länge abgeschrägt sein. Die Länge ändert sich dann entlang der Breite des Pultrudates. Die Entfernung zum Tip bestimmt sich dann durch einen für alle Kanten gleich bestimmten dichtesten oder weitesten Punkt oder einen Durchschnittswert der Kante.

Pultrudate derselben Pultrudatlage können unterschiedlich dicht an den Tip heranreichen. Abstände vom Tip bis zum Ende des Pultrudates sind dann verschieden. Die Pultrudate können einen Längsversatz ausbilden. Vorzugsweise sind entlang der Breite der Pultrudatlage außenseitige Pultrudate kürzer als zentral angeordnete Pultrudate der Pultrudatlage. Die Pultrudate einer Pultrudatlage sind besonderes bevorzugt unterschiedlich lang ausgebildet.

Bei dieser Ausführungsform fluchten rotorblattinnenseitige Pultrudatbahnen mit rotorblattaußenseitigen Pultrudatbahnen entlang ihre quer zur Längsrichtung außenseitigen Längskanten zumindest im Abschnitt des Längsversatzes. Die innenseitigen Pultrudatbahnen sollten also nicht seitlich über die außenseitigen Pultrudatbahn überhängen. Die rotorblattinnenseitige Pultrudatbahn kann auch schmaler sein als die durch den Längsversatz bereits verschmälerte, außenseitige Pultrudatbahn.

Vorzugsweise nimmt die Anzahl der Pultrudatlagen in einen Querschnitt zum tipseitigen Ende hin ab. Dadurch, dass die Pultrudatlagen abnehmen, wird der Gurt dünner in den Tipbereich hinein. Dieses Dünnerwerden ist kombiniert mit einem Schmalerwerden der dazugehörenden Pultrudatlagen.

Üblicherweise werden Pultrudat als im Querschnitt rechteckförmiges Halbzeug hergestellt, das als Rollenware zur Verfügung gestellt wird. Sie weisen eine im Prinzip endlos lange Länge auf. Sie haben eine deutlich größere Breite als eine Dicke, so dass sie einen Bahncharakter haben. Die Pultrudate sind auf die erforderliche Länge geschnitten. Der Schnitt erfolgt vorzugsweise senkrecht zur Längsrichtung. Er kann aber auch unter einem Winkel, also schräg zur Längsrichtung erfolgen.

Durch nachträgliches Überlaminieren der Pultrudatlagen und Herstellung der Gurte entstehen innerhalb der Gurte auf diese Weise keine oder nur kleine Hohlräume oder Lufteinschlüsse. Die Pultrudate werden dazu günstigerweise in einem Vakuuminfusionsverfahren miteinander zusammenlaminiert. Durch den im Vakuuminfusionsverfahren entstehenden Unterdruck wird die rotorblattinnenseitige Pultrudatlage auf die rotorblattaußenseitige, abgeschrägte Pultrudatlage gesogen, so dass sie über die gesamte Abschrägung Kontakt mit der rotorblattaußenseitigen Pultrudatbahn aufnimmt und ohne Lufteinschlüsse zu einem Gurt laminiert werden kann.

Die Pultrudate werden in dieser bevorzugten Ausführungsform der Erfindung nicht nur übereinandergestapelt, sondern auch nebeneinander angeordnet. So ist jede der Pultrudatlagen durch vorzugsweise wenigstens zwei, drei oder jede höhere Anzahl an nebeneinander angeordneten Pultrudaten ausgebildet. Diese Ausführungsform des Gurtes hat den Vorteil, dass Pultrudate gleicher Breite verwendet werden können, die durch Nebeneinanderlegen eine Pultrudatlage größerer Breite ausbilden, und durch das Nebeneinanderlegen einer unterschiedlichen Anzahl an Pultrudaten können Pultrudatlagen unterschiedlicher Breite ausgebildet werden. Die Pultrudatlagen können dadurch kostengünstig hergestellt werden, da immer nur ein bestimmter Pultrudattyp mit vorgegebener Breite und Dicke verwendet wird. Es brauchen keine unterschiedlichen Pultrudate unterschiedlicher Breite hergestellt und für den Gurt verwendet zu werden.

Besonders bevorzugt weist eine rotorblattaußenseitige Pultrudatlage eine erste Anzahl an nebeneinander angeordneten Pultrudaten auf und eine mittlere Pultrudatlage eine zweite Anzahl an nebeneinander angeordneten Pultrudaten, und eine rotorblattinnenseitige Pultrudatlage weist eine dritte Anzahl an nebeneinander angeordneten Pultrudaten in einem Querschnitt als entlang der Breite der Pultrudatlage auf, wobei die erste Anzahl größer als die zweite Anzahl und die zweite Anzahl größer als die dritte Anzahl ist. Es sind natürlich auch zwei oder vier und mehr Pultrudatlagen denkbar, auf die sich die Anzahl der Pultrudate dann entsprechend bezieht.

Es ist auch denkbar, dass entlang der Längsrichtung der Pultrudatlagen Kerne von Sandwichbauteilen, beispielsweise Balsa oder Schaum, angeordnet werden können, die dann mit den Pultrudatlagen überlaminiert werden.

Die Kerne können innen auf außenseitige Pultrudatlagen aufgebracht sein, um mit inneren Puktrudatlagen zu fluchten und einen rechteckigen Gurtquerschnitt auszubilden. Der rechteckige Gurtquerschnitt erhöht nach dem Laminieren die Beulsteifigkeit des Rotorblattes.

Die Kerne können auch neben den Pultrudatlagen angeordnet sein und dicker sein als der Gurt, vorzugsweise sind die Kerne so dick wie der Kern der in Sandwichbauweise hergestellten Rotorblattschale. Dadurch wird ein stetiger Übergang von Gurt zur ihn umgebenden Rotorblattschale geschaffen.

Die Aufgabe wird in ihrem zweiten Aspekt durch ein Verfahren mit den Merkmalen des Anspruchs 11 gelöst.

Das Verfahren eignet sich zur Herstellung eines der oben genannten Rotorblätter. Umgekehrt kann jedes der oben genannten Rotorblätter durch eines der nachfolgenden Verfahren hergestellt werden.

Erfindungsgemäß wird eine schmalere rotorblattinnenseitige Pultrudatlage auf eine breitere rotorblattaußenseitige Pultrudatlage gelegt und die rotorblattinnenseitige Pultrudatlage in einer Längsrichtung über die rotorblattaußenseitige Pultrudatlage hinaus zum Tip erstreckt.

Eine rotorblattinnenseitige Pultrudatlage wird günstigerweise in Richtung der Rotorblattwurzel auf die rotorblattaußenseitige Pultrudatlage aufgelegt, die sich entgegen der Längsrichtung über die rotorblattinnenseitige Pultrudatlage hinaus zur Rotorblattwurzel erstreckt. Die rotorblattinnenseitige Pultrudatlage ist daher im Tipbereich länger als die rotorblattaußenseitige Pultrudatlage und vorzugsweise schmaler und im rotorblattwurzelseitigen Bereich kürzer und schmaler als die rotorblattaußenseitige Pultrudatlage.

Abschließend werden die Pultrudatlagen rotorblattinnenseitig von einem Gelege, einem Gewebe, einem Vlies oder einer Kombination der genannten Materialen überlegt und dann mit einem Harz infundiert und zu einem festen Laminat geformt.

Die Pultrudatlagen werden vorzugsweise durch eine Mehrzahl nebeneinander angeordneter jeweils in Längsrichtung verlaufender Pultrudate ausgebildet.

Vorzugsweise wird eine erste Anzahl an gleichbreiten Pultrudaten nebeneinander zur Ausbildung der rotorblattaußenseitigen Pultrudatlage in dem rotorblattwurzelseitigen Abschnitt angeordnet. Die erste Anzahl von gleichbreiten Pultrudaten ist auch vorzugsweise gleichlang und eine dritte Anzahl an gleichbreiten Pultrudaten ist über die rotorblattaußenseitige Pultrudatlage gelegt und wird über den rotorblattwurzelseitigen Abschnitt hinaus in einen tipseitigen Abschnitt hinein verlegt. Vorzugsweise läuft die rotorblattaußenseitige Pultrudatlage nicht über den rotorblattwurzelseitigen Abschnitt hinaus, sondern endet im rotorblattwurzelseitigen Abschnitt, während die rotorblattinnenseitige Pultrudatlage weiter in Längsrichtung bis in den tipseitigen Abschnitt hinein verlegt wird. Günstigerweise ist also die rotorblattaußenseitige Pultrudatlage breiter, aber kürzer als die rotorblattinnenseitige Pultrudatlage, die schmaler, aber länger ausgebildet ist.

Vorzugsweise werden nicht nur zwei, sondern drei, vier oder eine höhere Anzahl an Pultrudatlagen aufeinandergelegt, die sukzessive nacheinander zum Tip auslaufen. Dadurch entsteht ein stetiger werdendes Verjüngungsverhalten des Gurtes.

Die Pultrudatlagen selbst können aus jeweils einem Pultrudat oder günstigerweise aus einer unterschiedlichen Anzahl an vorzugsweise gleichbreiten Pultrudaten gebildet werden. Das ist besonders kostengünstig.

Die Längsseiten der Pultrudatlagen können von Kernen von Sandwichbauteilen abgeschlossen werden. dadurch werden die Gurte zum einen auf eine rechteckige Querschnittform gebracht zum anderen an die Dicke der Rotorblattschal im Sandwichberiech angepasst.

Die Erfindung wird anhand von Ausführungsbeispielen in zehn Figuren beschrieben. Dabei zeigen:
- Fig. 1: eine schematische Ansicht einer Strangziehmaschine zur Herstellung von Pultrudaten,
- Fig. 2: eine schematische Draufsicht auf einen Gurt in einer ersten Ausführungsform,
- Fig. 2a: eine Schnittansicht entlang der Linie 2a in Fig. 1,
- Fig. 2b: eine Schnittansicht entlang der Linie 2b in Fig. 2,
- Fig. 3: eine Draufsicht auf einen Gurt in einer zweiten Ausführungsform,
- Fig. 3a: eine Schnittansicht entlang der Linie IIIa-IIIa in Fig. 3,
- Fig. 3b: eine Schnittansicht entlang der Linie IIIb-IIIb in Fig. 3,
- Fig. 3c: eine Schnittansicht entlang der Linie IIIc-IIIc in Fig. 3,
- Fig. 3d: eine Schnittansicht entlang der Linie IIId-IIId in Fig. 3,
- Fig. 4: eine Schnittansicht entlang der Linie IIIb-IIIb in einer zweiten Ausführungsform mit Sandwichkernen.

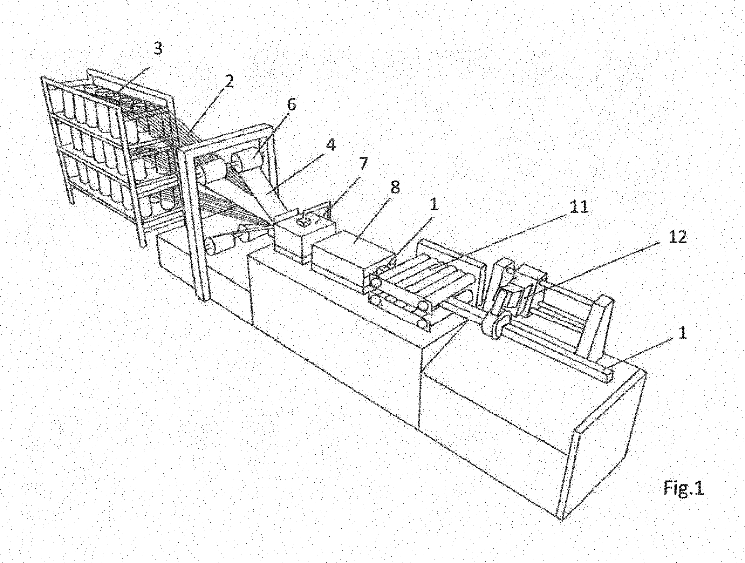

Eine in Fig. 1 dargestellte Strangziehmaschine dient zum Strangziehen eines faserverstärken Kunststoffprofils, wobei der Kunststoff in Form eines Harzes um Fasern und oder Matten angelagert wird. Derartige Kunststoffprofile werden auch Pultrudate 1 genannt. Die einzelnen Fasern 2 werden als Glasfasern, Kohlefasern von vorzugsweise vertikal gelagerten Faserspindeln 3 abgewickelt. Die Fasern 2 können zusammen mit Verstärkungsmaterialien sowie Matten 4 oder Vliesen, die auf entsprechenden, vorzugsweise horizontal gelagerten Rollen 6 angeordnet sind, gemeinsam als Bündel einer Harzwanne und Vorformstation 7 zugeführt werden. Es ist vorzugsweise vorgesehen, dass die Fasern 2 nur unidirektional angeordnet sind. Es kann aber auch vorgesehen sein, dass nur die Fasern 2 oder nur die Matten 4 oder Vliese als Verstärkungsmaterial des Pultrudates 1 verwendet werden.

In der in Fig. 1 dargestellten Strangzugmaschine zur Herstellung der Pultrudate 1 werden sowohl die Fasern 2 als auch die Matten 4 zur Verstärkung der Pultrudate 1 verwendet. Die Matten 4 und Fasern 2 werden zunächst durch die Harzwanne und Vorformstation 7 gezogen. Dabei lagert sich flüssiges Harz um die Fasern 2 herum an. Das um die Fasern 2 herum angelagerte Harz wird zusammen mit den Fasern 2 und den Matten 4 in ein Härtungswerkzeug 8 hinein gezogen. In dem Härtungswerkzeug 8 ist eine Formmatrize vorgesehen, die dem Pultrudat 1 vorzugsweise die gewünschte Querschnittsform hinsichtlich Breite und Dicke gibt. Der Querschnitt des Pultrudates 1 ist über die gesamte Längsausdehnung, die der Ziehrichtung entspricht, gleichbleibend. Der Querschnitt des Pultrudates 1 ist rechteckförmig. Dabei kann das Pultrudat 1 aber auch eine platten- oder streifenartige Gestalt annehmen.

In dem Härtungswerkzeug 8 wird das Harzmaterial gehärtet, indem dem Harz, das ein Zweikomponentensystem sein kann, Wärme zugeführt wird. Die Ziehgeschwindigkeit und die Wärme sind so aufeinander abgestimmt, dass das Pultrudat nach dem Verlassen des Härtungswerkzeuges 8 seine endgültige Festigkeit erreicht hat und ausgehärtet ist und auch durch nachträgliches Erwärmen keine weitere Vernetzung des Harzes stattfindet.

Das Pultrudat ist im Prinzip ein endloses Strangziehteil das mittels eines Ziehwerkzeuges 11 kontinuierlich aus dem Härtungswerkzeug 8 herausgezogen wird und anschließend in einer Sägemaschine 12 auf eine gewünschte Länge geschnitten werden kann. Es ist aber auch denkbar, dass das Pultrudat 1 in einem Stück auf eine Rolle aufgewickelt wird und der weiteren Verwendung zugeführt wird. Die Pultrudate 1 weisen, insbesondere wenn sie als Rollenware zur Verfügung gestellt werden, üblicherweise Breiten bis zu einem Meter auf und Dicken von einem Millimeter bis fünf Millimeter auf. Die Pultrudate 1 werden zur Ausbildung erfindungsgemäßer Gurte in Rotorblättern verwendet. Natürlich sind auch andere Verwendungen von Pultrudaten 1 möglich.

Das Rotorblatt verfügt beispielsweise über zwei Gurte 20, die sich in einem Inneren des Rotorblattes gegenüberliegen und die auf Innenseiten sich gegenüberliegender Rotorblatthalbschalen auflaminiert sind. Zwischen den beiden Gurten 20 verläuft ein Hauptsteg. Der weitere Aufbau des Rotorblattes soll hier nicht näher beschrieben werden, da sich die Erfindung hinsichtlich des Aufbaus des Rotorblattes auf herkömmliche Rotorblätter bezieht. Die Gurte 20 erstrecken sich von einer Rotorblattwurzel 31 bis in einen Tipbereich des Rotorblattes.

Zweckmäßigerweise ist das Verhältnis von Dicke zu Breite des Gurtes 20 entlang einer Längsrichtung L des Rotorblattes, die der Längsrichtung L des Gurtes entspricht, in etwa gleichbleibend. Es bewegt sich vorteilhafterweise zumindest innerhalb vorgegebener Schranken.

Im Tipbereich wird das Rotorblatt jedoch zunehmend schmaler, so dass herkömmlicherweise die breiten Pultrudatstreifen in den Tipbereich hinein abgeschrägt werden, und zwar derart, dass die Breite der Pultrudate in den Tipbereich hinein zunehmend geringer wird. Dazu werden Pultrudate herkömmlicherweise schräg abgesägt.

Erfindungsgemäß wird der sich in den Tipbereich hinein in der Breite verjüngende Gurt 20 zur Verfügung gestellt, indem die Pultrudate 1 entweder in verschiedener Breite B und Länge L übereinander oder die Pultrudate 1 gleicher Breite B oder verschiedener Breite B und verschiedener Länge L nebeneinander und übereinander angeordnet werden, so dass sich der aus ihnen gebildete Gurt 20 in den Tipbereich hinein verjüngt.

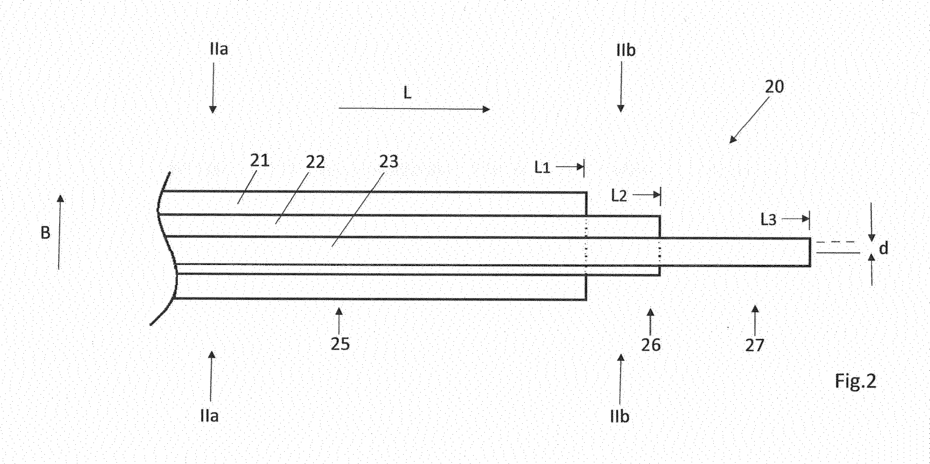

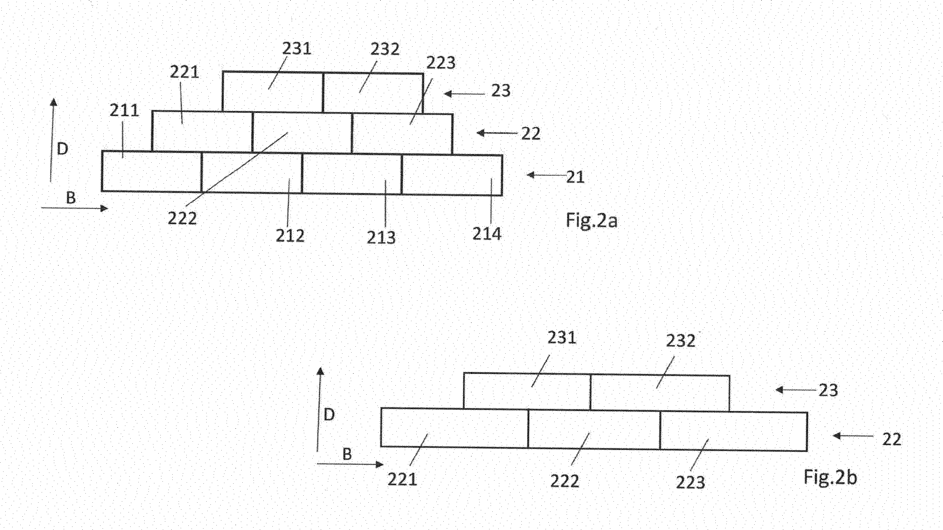

Die Fig. 2, 2a und 2b zeigen eine erste Ausführungsform des erfindungsgemäßen Gurtes 20. Der Gurt 20 umfasst drei Pultrudatlagen 21, 22, 23.

Der in Fig. 2 in einer Draufsicht dargestellte Gurt 20 weist einen rotorblattwurzelseitigen Abschnitt 25, einen mittleren Abschnitt 26 und einen tipseitigen Abschnitt 27 auf. Der Gurt 20 wird von einer Rotorblattwurzel zu einem Tip hin stufenweise zunehmend schmaler. Die Breite B der Gurte 20 verringert sich hier in zwei Stufen. Bei anderen Ausführungsformen sind natürlich auch höhere Stufenanzahlen möglich.

Fig. 2a zeigt einen Querschnitt des Gurtes 20 im rotorblattwurzelseitigen Abschnitt 25. Der Gurt 20 weist in dem Querschnitt eine rotorblattaußenseitige breite Pultrudatlage 21 auf, die aus vier einzelnen Pultrudaten 211, 212, 213, 214 besteht, wie sie jeweils beispielhaft in einer Strangziehmaschine gemäß Fig. 1 hergestellt werden können. Eine schmalere, mittlere Pultrudatlage 22, die aus drei einzelnen Pultrudaten 221,222, 223 besteht, sowie eine noch schmalere rotorblattinnenseitige Pultrudatlage 23, die aus zwei Pultrudaten 231, 232 besteht, bilden zusammen mit der rotorblattaußenseitigen Pultrudatlage 21 den Gurt 20 aus. Die Pultrudate 211, 212, 213, 214, 221, 222, 223, 231, 232 der Pultrudatlagen 21, 22, 23 sind innerhalb der Pultrudatlagen 21, 22, 23, aber auch zwischen den Pultrudatlagen 21, 22, 23 mit einer identischen Breite B ausgebildet.

Die Pultrudate 211, 212, 213, 214, 221, 222, 223, 231, 232 können daher günstigerweise mit einer einzigen Strangziehmaschine gemäß Fig. 1 hergestellt werden und müssen nur in ihrer Länge L gemäß Fig. 2 zugeschnitten werden, um den Gurt 20 auszubilden.

Ein Rückblick auf Fig.2 zeigt, dass die rotorblattaußenseitige Pultrudatlage 21 eine erste Breite B₁ aufweist und eine erste Länge L₁. Die mittlere Pultrudatlage 22 weist eine zweite Breite B₂ und eine zweite Länge L₂ auf, während die rotorblattinnenseitige Pultrudatlage 2 eine dritte Breite B₃ und eine dritte Länge L₃ aufweist. Dabei ist die erste Breite B₁ größer als die zweite Breite B₂ und diese größer als die dritte Breite B₃, während die dritte Länge L₃ größer als die zweite Länge L₂ und diese größer als die erste Länge L₁ ist. Die breiten Pultrudatlagen sind kürzer als die schmalen Pultrudatlagen.

Fig. 2b zeigt einen Schnitt in dem mittleren Abschnitt 26 des Gurtes 20. Die rotorblattaußenseitige Pultrudatlage 21 ist im mittleren Abschnitt 26 bereits ausgelaufen, also nicht mehr vorhanden. Im mittleren Abschnitt 26 sind nur noch die mittlere Pultrudatlage 22 sowie die rotorblattinnenseitige Pultrudatlage 23 mit drei Pultrudaten 221, 222, 223 beziehungsweise zwei einzelnen Pultrudaten 231, 232 vorhanden. Im mittleren Abschnitt 26 ist die mittlere Pultrudatlage 22 jedoch rotorblattaußenseitig direkt an der Rotorblattschale angeordnet.

Ein Schnitt im tipseitigen Abschnitt, der nicht dargestellt ist, würde lediglich noch aus der rotorblattinnenseitigen Pultrudatlage 23 mit den zwei Pultrudate 231, 232 bestehen.

Durch die Anordnung von gleichbreiten Pultrudaten 211, 212, 213, 214, 221, 222, 223, 231, 232 nebeneinander und Anordnung von Pultrudaten 211, 212, 213, 214, 221, 222, 223, 231, 232 unterschiedlicher Länge L übereinander ist es möglich, einen Gurt 20 herzustellen, der eine sich zu einem Tip 30 hin verjüngende Breite B aufweist und gleichzeitig eine sich zum Tip 30 hin verkleinernde Dicke D aufweist, so dass das eingangs genannte Verhältnis von Breite B zu Dicke D zwar nicht gleichbleibt, aber sich doch innerhalb vorgegebener Grenzwerte bewegt.

Es ist in der Ausführungsform gemäß Fig. 2 vorgesehen, dass die rotorblattinnenseitige Pultrudatlage 23 nicht entlang der Breite B mittig über der rotorblattaußenseitigen Pultrudatlage 23 und der mittleren Pultrudatlage 22 liegt, sondern dass sie zu einer Längsseite hin versetzt ist. Die Verschiebung d zwischen den Mittellinien der rotorblattaußenseitigen Pultrudatlage 21 und der mittleren Pultrudatlage 22 zur rotorblattinnenseitigen Pultrudatlage 23 hin ist durch die Abweichung der gestrichelten zur durchgezogenen Mittellinie dargestellt.

Es ist auch denkbar, dass die mittlere Pultrudatlage 22 versetzt zur und auf der rotorblattaußenseitigen Pultrudatlage 21 angeordnet ist, um den Gurt 20 in Tiefenrichtung zu krümmen.

Zur Herstellung des Gurtes 20 gemäß Fig. 2 bedarf es lediglich eines Pultrudattyps.

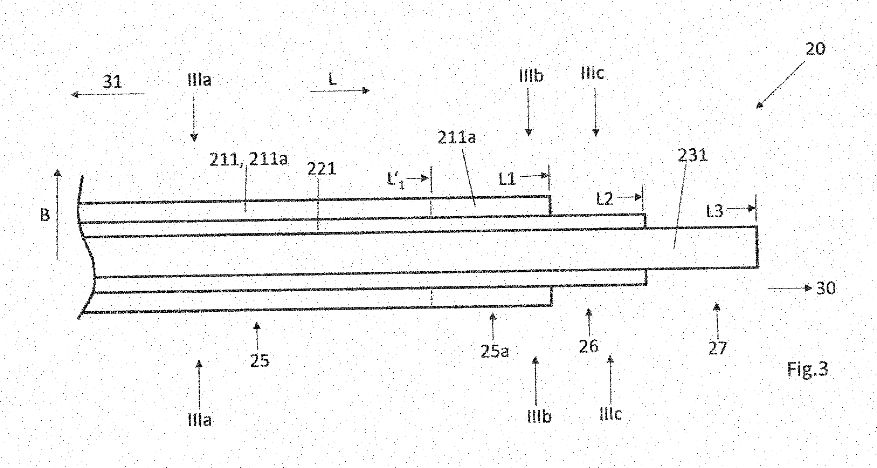

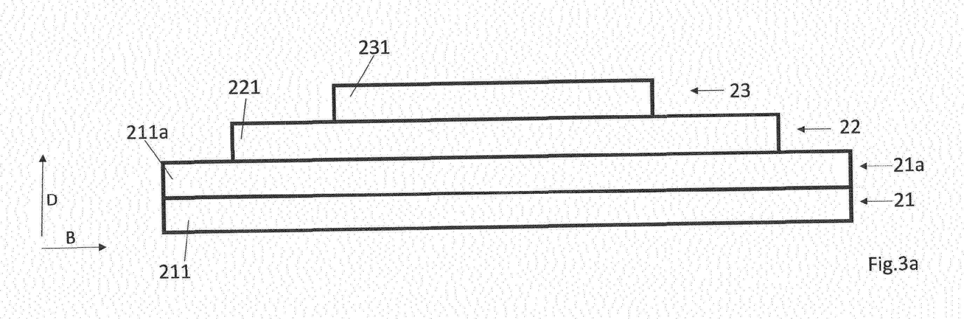

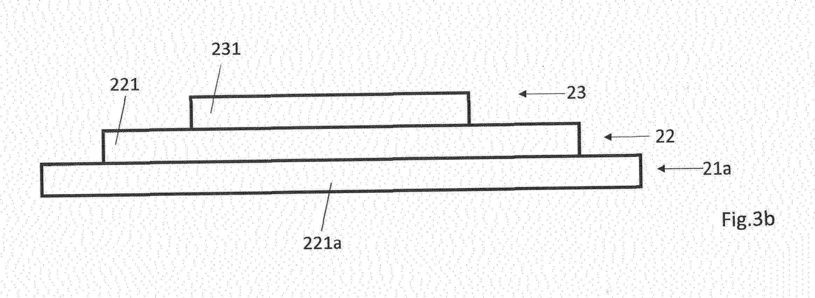

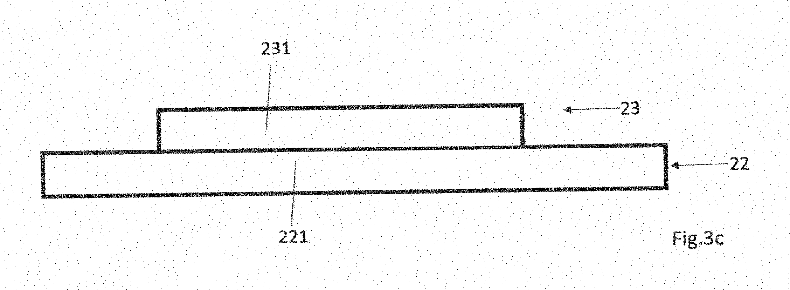

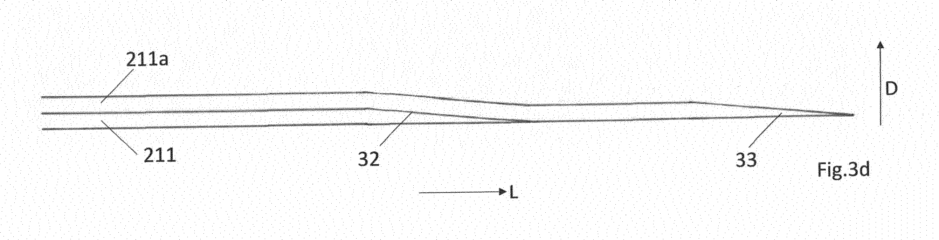

In Fig. 3 ist eine zweite Ausführungsform des erfindungsgemäßen Gurtes 20 dargestellt, der ebenfalls eine zum tipseitigen Ende hin abnehmende Breite B und auch eine zum tipseitigen Ende hin abnehmende Dicke D aufweist. Unter der Dicke D ist hierbei im Querschnitt eine maximale Dicke des Gurtes 20 entlang einer Mittellinie in der Längsrichtung zu verstehen.

Der Gurt 20 umfasst wie in der ersten Ausführungsform den rotorblattwurzelseitigen Abschnitt 25, den mittleren Abschnitt 26 sowie den tipseitigen Abschnitt 27. In dem rotorblattwurzelseitigen Abschnitt 26 sind nunmehr vier Pultrudatlagen 21, 21a, 22, 23 übereinandergeschichtet, wie der Querschnitt entlang der Linie IIIa-IIIa in Fig. 3 zeigt.

Zwei rotorblattaußenseitige Pultrudatlagen 21, 21a umfassen jeweils ein einziges Pultrudat 211, 211a der ersten Breite B₁ sowie ein einziges rotorblattinnenseitig auf den beiden rotorblattaußenseitigen Pultrudatlagen 21, 21a angeordnetes mittleres Pultrudat 221 der zweiten Breite B₂ und die rotorblattinnenseitig auf der mittleren Pultrudatlage 23 angeordnete rotorblattinnenseitige Pultrudatlage 23 aus ebenfalls einem einzigen Pultrudat 231 mit der dritten Breite B₃. Dabei ist die erste Breite B₁ größer als die zweite Breite B₂ und die zweite Breite B₂ größer als die dritte Breite B₃.

Fig. 3 zeigt, dass jede der vier Pultrudatlagen 21, 21a, 22, 23 jeweils durch ein einzelnes zusammenhängendes Pultrudat 211, 211a, 221, 231 ausgebildet wird. Die beiden rotorblattaußenseitigen Pultrudate 211, 211a weisen die gleiche erste Breite B₁ auf und das rotorblattaußenseitige Pultrudat 211 eine Länge L'₁ und das rotorblattaußenseitige Pultrudat 211a die erste Länge L₁. Das mittlere Pultrudat 221 weist die zweite Breite B₂ auf und die zweite Länge L₂, und das rotorblattinnenseitige Pultrudat 231 weist die dritte Breite B₃ auf und die dritte Länge L₃. Die erste Breite B₁ ist größer als die zweite Breite B₂. Die zweite Breite B₂ ist größer als die dritte Breite B₃. Für die Längen gilt Entsprechendes, wobei die Länge L'₁ kürzer ist als die erste Länge L₁.

In einem tipseitigen Abschnitt 25a des rotorblattwurzelseitigen Abschnitts 25 weist der Gurt 20 immer noch die erste Breite B₁ auf, jedoch ist die Dicke D des Gurtes 20 dadurch verringert, dass der Gurt 20 dort nur noch drei der Pultrudatlagen 21a, 22, 23 aufweist, wobei die rotorblattaußenseitige Pultrudatlage 21a die erste Breite B₁, die mittlere Pultrudatlage 22 die zweite Breite B₂ und die rotorblattinnenseitige Pultrudatlage 23 die dritte Breite B₃ aufweist. In einem Schnitt entlang der Linie IIIc-IIIc ist die Breite des Gurtes 20 dadurch auf die zweite Breite B2 verringert, dass die rotorblattaußenseitige Pultrudatlage 21a ausgelaufen ist, und die Dicke D ist verringert, weil der Gurt 20 dort nur noch aus zwei Pultrudatlagen 22, 23, nämlich dem mittleren Pultrudat 221 und dem rotorblattinnenseitigen Pultrudat 231 besteht. Zum Tip 30 hin läuft auch die mittlere Pultrudatlage 22 am Ende des mittleren Abschnitts 26 aus, und der tipseitige Abschnitt 27 des Gurtes 20 wird nur noch durch die rotorblattinnenseitige Pultrudatlage 23 ausgebildet. Die vier Pultrudatlagen 21, 21a, 22, 23 werden durch drei unterschiedlich breite Pultrudate 211, 211a, 221, 231 gebildet, es sind daher drei unterschiedliche Strangziehverfahren erforderlich, um den Gurt 20 gemäß der zweiten Ausführungsform herzustellen.

Fig. 3d zeigt einen Querschnitt entlang der Linie IIId-IIId in Längsrichtung L des Gurtes 20. Dabei wird insbesondere erkennbar, dass sich die tipseitigen Enden der beiden rotorblattaußenseitigen Pultrudate 211, 211a sehr flach abschrägen. Dabei entspricht die Schrägung einem Verhältnis von 100:1, d.h. dass eine Höhe von einem Millimeter über 100 mm abgeschrägt wird. Dadurch ist es möglich, dass das auf dem rotorblattaußenseitigen Pultrudat 211 entlang einer Abschrägung 32 verlaufende andere rotorblattaußenseitige Pultrudat 211a der Abschrägung 32 folgt. Pultrudate 1 sind zwar ausgehärtete Bauteile, jedoch sind sie durchaus biegsam und können daher insbesondere der flachen Abschrägung 32 sowie einer weiteren flachen Abschrägung 33 nachfolgen.

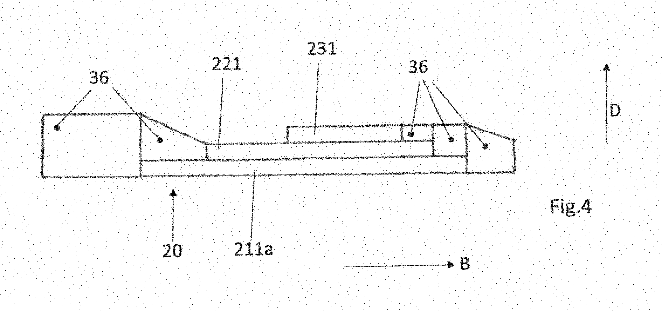

In der Fig. 4 ist gezeigt, dass der erfindungsgemäße Gurt 20 im Querschnitt die Form einer Stufenpyramide aufweist. Seitlich an Längsseiten der Pultrudate 211a, 221, 231 können über ihre gesamte Längsausdehnung Kerne 36 von Sandwichbauteilen in Form von Balsaholz oder Schaum angeordnet werden. Die Breite der Kerne 26 entspricht dem Überstand des rotorblattaußenseitigen Pultrudates 211a oder des mittleren Pultrudates 221 gegenüber dem auf ihm liegenden mittleren Pultrudat 221 beziehungsweise rotorblattinnenseitigen Pultrudat 231. Eine Dicke D der Kerne 26 kann so bemessen sein, dass sie nicht über die Dicke D des Gurtes 20 hinausgeht wie rechts in der Fig. 4 dargestellt.

Es sind jedoch auch andere Dicken D der Kerne 26 denkbar, die in der Fig. 4 auf der linken Seite dargestellt werden. Dort ist die Dicke des Kernes 36 so gewählt, dass er die Dicke des Gurtes stetig auf eine Dicke des den Gurt umgebenden Sandwichkern der Rotorblattschale bringt. Der linke Kern 36 hat eine Höhe, die der Höhe des Sandwichkernes der Rotorblattschale entspricht und der angeschrägte Kern 36 überführt eine Dicke des Gurte stetig auf die Dicke der Rotorblattschale.

Konstruktionen von Pultrudatlagen in der ersten und zweiten Ausführungsform ist gemeinsam, dass die Pultrudate 211, 211a, 212, 213, 214, 221, 222, 223, 231, 232 der Gurte 20 mit einer Faser-, Gewebe- und/oder Gelegelage überlegt werden, nachdem sie auf der Rotorblattschale aufgebracht wurden. Sie werden dazu vorzugsweise auf eine Faser-, Gewebe- und/oder Gelegelage, die auf der Rotorblattinnenschale liegt, aufgelegt. Der Gurt 20 ist damit gleichsam zwischen zwei Gewebelagen angeordnet. Diese können in einem Vakuuminfusionsverfahren mit einem Harzsystem infundiert werden, so dass die Pultrudate 211, 211a, 212, 213, 214, 221, 222, 223, 231, 232 zum einen miteinander verklebt und zum anderen insbesondere auf der Innenseite der Rotorblatthalbschale aufklebt werden. Es handelt sich um herkömmliche Infusionsverfahren, die hier nicht weiter beschrieben werden sollen.

### Bezugszeichenliste

- 1: Pultrudat
- 2: Fasern
- 3: Faserspindeln
- 4: Matten

- 6: Rollen
- 7: Vorformstation
- 8: Härtungswerkzeug

- 11: Ziehwerkzeug
- 12: Sägemaschine

- 20: Gurt
- 21: Pultrudatlage
- 21a: Pultrudatlage
- 22: Pultrudatlage
- 23: Pultrudatlage

- 25: rotorblattwurzelseitiger Abschnitt
- 25a: tipseitiger Abschnitt des rotorblattwurzelseitigen Abschnitts
- 26: mittlerer Abschnitt
- 27: tipseitiger Abschnitt

- 30: Tip
- 31: Rotorblattwurzel
- 32: Abschrägung
- 33: Abschrägung
- 36: Kerne

- 211: Pultrudat
- 211a: Pultrudat
- 212: Pultrudat
- 213: Pultrudat
- 214: Pultrudat
- 221: Pultrudat
- 222: Pultrudat
- 223: Pultrudat

- 231: Pultrudat
- 232: Pultrudat

- d: Verschiebung

- B: Breite
- B₁: erste Breite
- B₂: zweite Breite
- B₃: dritte Breite
- D: Dicke
- L: Länge/Längsrichtung
- L₁: erste Länge
- L'₁: Länge
- L₂: zweite Länge
- L₃: dritte Länge

## Patentansprüche

1. Rotorblatt mit einem Gurt (20) mit einer Mehrzahl an Pultrudatlagen (21, 21a, 22, 23) mit jeweils einer Länge (L) und einer Breite (B), einem Tip (30) und einer Rotorblattwurzel (31),
**dadurch gekennzeichnet, dass** schmalere Pultrudatlagen (22, 23) in einer Längsrichtung (L) dichter an den Tip (30) heranreichen als breitere Pultrudatlagen (21, 21a) und auf rotorblattinnenseitige Innenflächen von Pultrudaten (211a, 221) Kerne (36) von Sandwichbauteilen aufgebracht sind und die Kerne eine Dicke (D) aufweisen, derart, dass sie eine Dicke des Gurtes (20) stetig auf eine Dicke des den Gurt (20) umgebenden Sandwichkerns einer Rotorblattschale bringen.

2. Rotorblatt nach Anspruch 1,
**dadurch gekennzeichnet, dass** breitere Pultrudatlagen (21, 21a) dichter an die Rotorblattwurzel (31) heranreichen als schmalere Pultrudatlagen (22, 23).

3. Rotorblatt nach Anspruch 1 oder 2,
**dadurch gekennzeichnet, dass** rotorblattaußenseitige Pultrudatlagen (21, 21a) breiter als rotorblattinnenseitige Pultrudatlagen (23) ausgebildet sind.

4. Rotorblatt nach Anspruch 2,
**dadurch gekennzeichnet, dass** die in jedem Querschnitt in Längsrichtung L des Rotorblattes rotorblattaußenseitigen Pultrudatlagen (21, 21a) des Gurtes (20) breiter als die rotorblattinnenseitigen Pultrudatlagen (23) ausgebildet sind.

5. Rotorblatt nach einem der Ansprüche 1 bis 4,
**dadurch gekennzeichnet, dass** die Pultrudatlagen (21a, 21, 22, 23) in einem Querschnitt desto schmaler werden oder höchstens die gleiche Breite (B) aufweisen, je rotorblattinnenseitiger sie angeordnet sind.

6. Rotorblatt nach einem der Ansprüche 1 bis 5,
**dadurch gekennzeichnet, dass** die Pultrudatlagen (21, 22, 23) entlang eines Querschnitts aus wenigstens zwei nebeneinanderliegenden Pultrudaten (211, 212, 213, 214, 221, 222, 223, 231, 232) ausgebildet sind.

7. Rotorblatt nach einem der vorstehenden Ansprüche,
**dadurch gekennzeichnet, dass** eine Anzahl an Pultrudatlagen (21, 21a, 22, 23) in einem Querschnitt in Längsrichtung (L) zum tipseitigen Ende und /oder zum rotorblattwurzelseitigen Ende hin abnimmt.

8. Rotorblatt nach einem der vorstehenden Ansprüche,
**dadurch gekennzeichnet, dass** Querkanten der Pultrudatlagen (21, 21a, 22, 23) an einem tipseitigen und/oder wurzelseitigen Ende zur Rotorblattaußenseite hin abgeschrägt ausgeformt sind.

9. Rotorblatt nach einem der vorstehenden Ansprüche,
**dadurch gekennzeichnet, dass** verschiedene Pultrudate (211, 212, 213, 214, 221, 222, 223, 231, 232) derselben Pultrudatlage (21, 22, 23) unterschiedlich dicht an den Tip (30) heranreichen.

10. Rotorblatt nach einem der vorstehenden Ansprüche,
**dadurch gekennzeichnet, dass** eine rotorblattaußenseitige Pultrudatlage (21) eine erste Anzahl an nebeneinander angeordneten Pultrudaten (211, 212, 213, 214) aufweist und eine mittlere Pultrudatlage (22) eine zweite Anzahl an Pultrudaten (221, 222, 223) aufweist und eine rotorblattinnenseitige Pultrudatlage (23) eine dritte Anzahl an Pultrudaten (231, 232) in einem Querschnitt aufweist und die erste Anzahl größer als die zweite Anzahl und die zweite Anzahl größer als die dritte Anzahl ist.

11. Verfahren zur Herstellung eines Rotorblattes mit einem Gurt, indem,
eine schmalere rotorblattinnenseitige Pultrudatlage (23) auf eine breitere rotorblattaußenseitige Pultrudatlage (21) aufgelegt wird und die schmalere rotorblattinnenseitige Pultrudatlage (23) in einer Längsrichtung (L) über die rotorblattaußenseitige Pultrudatlage (21) hinaus zum Tip (30) erstreckt wird-und an Längskanten von Pultrudatlagen (21, 21a, 22, 23) Kerne (36) von Sandwichbauteilen angeordnet werden und die Kerne (36) mit einer Dicke (D) ausgebildet werden, dass sie eine Dicke des Gurtes (20) auf eine Dicke des den Gurt (20) umgebenden Sandwichkerns einer Rotorblattschale bringen.

12. Verfahren nach Anspruch 11,
**dadurch gekennzeichnet, dass** Querkanten von Pultrudatlagen am tipseitigen Ende und/oder am rotorwurzelseitigen Ende angeschrägt werden.

13. Verfahren nach Anspruch 11 oder 12,
**dadurch gekennzeichnet, dass** die schmalere rotorblattinnenseitige Pultrudatlage (23) auf die breitere rotorblattaußenseitige Pultrudatlage (21) aufgelegt wird und die breitere rotorblattaußenseitige Pultrudatlage (21) entgegen der Längsrichtung (L) über die rotorblattinnenseitige Pultrudatlage (23) hinaus zur Rotorblattwurzel (31) erstreckt wird.

## Claims

1. Rotor blade comprising a chord (20) having a plurality of pultruded layers (21, 21a, 22, 23) each having a length (L) and a width (B), a tip (30) and a rotor blade root (31), **characterised in that** in a longitudinal direction (L) narrower pultruded layers (22, 23) extend closer to the tip (30) than wider pultruded layers (21, 21a), and cores (36) of sandwich components are applied to inner surfaces of pultrudates (211a, 221) on the rotor blade inner side, and the cores have a thickness (D) such that they continuously bring a thickness of the chord (20) to a thickness of the sandwich core of a rotor blade shell surrounding the chord (20).

2. Rotor blade according to claim 1, **characterised in that** wider pultruded layers (21, 21a) extend closer to the rotor blade root (31) than narrower pultruded layers (22, 23).

3. Rotor blade according to claim 1 or 2, **characterised in that** pultruded layers (21, 21a) on the rotor blade outer side are wider than pultruded layers (23) on the rotor blade inner side.

4. Rotor blade according to claim 2, **characterised in that** the pultruded layers (21, 21a) of the chord (20) in each cross-section in the longitudinal direction L of the rotor blade on the rotor blade outer side are wider than the pultruded layers (23) on the rotor blade inner side.

5. Rotor blade according to any of claims 1 to 4, **characterised in that** the pultruded layers (21a, 21, 22, 23) in one cross-section are narrower or at most have the same width (B) the further inside the rotor blade they are arranged.

6. Rotor blade according to any of claims 1 to 5, **characterised in that** the pultruded layers (21, 22, 23) along one cross-section are formed from at least two pultrudates (211, 212, 213, 214, 221, 222, 223, 231, 232) lying adjacent to one another.

7. Rotor blade according to any one of the preceding claims, **characterised in that** a number of pultruded layers (21, 21a, 22, 23) in a cross-section decreases in the longitudinal direction (L) towards the tip end and/or towards the rotor blade root end.

8. Rotor blade according to any one of the preceding claims, **characterised in that** transverse edges of the pultruded layers (21, 21a, 22, 23) are chamfered on a tip end and/or a root end towards the rotor blade outer side.

9. Rotor blade according to any one of the preceding claims, **characterised in that** the pultrudates (211, 212, 213, 214, 221, 222, 223, 231, 232) of the same pultrudate layer (21, 22, 23) extend closer to the tip (30) to different extents.

10. Rotor blade according to any one of the preceding claims, **characterised in that** a pultruded layer (21) on the rotor blade outer side has a first number of pultrudates (211, 212, 213, 214) arranged adjacent to one another, and a middle pultruded layer (22) has a second number of pultrudates (221, 222, 223), and a pultruded layer (23) on the rotor blade inner side has a third number of pultrudates (231, 232) in a cross-section, and the first number is greater than the second number and the second number is greater than the third number.

11. Method for producing a rotor blade having a chord, in which a narrower pultruded layer (23) on the rotor blade inner side is laid onto a wider pultruded layer (21) on the rotor blade outer side, and the narrower pultruded layer (23) on the rotor blade inner side extends in a longitudinal direction (L) beyond the pultruded layer (21) on the rotor blade outer side to the tip (30)-and cores (36) of sandwich components are arranged on long edges of pultruded layers (21, 21a, 22, 23) and the cores (36) are formed with a thickness (D) such that they bring a thickness of the chord (20) to a thickness of the sandwich core of a rotor blade shell surrounding the chord (20).

12. Method according to claim 11, **characterised in that** transverse edges of pultruded layers on the tip end and/or on the rotor root end are chamfered.

13. Method according to claim 11 or 12, **characterised in that** the narrower pultruded layer (23) on the rotor blade inner side is laid onto the wider pultruded layer (21) on the rotor blade outer side, and the wider pultruded layer (21) on the rotor blade outer side extends counter to the longitudinal direction (L) beyond the pultruded layer (23) on the rotor blade outer side to the rotor blade tip (31).

## Revendications

1. Pale de rotor avec une courroie (20) avec une multitude de couches de profilés pultrudés (21, 21a, 22, 23) avec respectivement une longueur (L) et une largeur (B), une pointe (30) et une racine de pale de rotor (31),
**caractérisée en ce que** des couches de profilés pultrudés plus étroites (22, 23) atteignent la pointe (30) de plus près dans une direction longitudinale (L) que des couches de profilés pultrudés plus larges (21, 21a) et que des noyaux (36) de composants sandwich sont appliqués sur des faces intérieures côté intérieur de la pale de rotor de profilés pultrudés (211a, 221) et les noyaux présentent une épaisseur (D) telle qu'ils amènent une épaisseur de la courroie (20) continuellement sur une épaisseur du noyau sandwich d'une coque de pale de rotor, noyau qui entoure la courroie (20).

2. Pale de rotor selon la revendication 1, **caractérisée en ce que** des couches de profilés pultrudés plus larges (21, 21a) atteignent la racine de pale de rotor (31) de plus près que des couches de profilés pultrudés plus étroites (22, 23).

3. Pale de rotor selon la revendication 1 ou 2, **caractérisée en ce que** des couches de profilés pultrudés côté extérieur de la pale de rotor (21, 21a) sont formées plus larges que des couches de profilés pultrudés côté intérieur de la pale de rotor (23).

4. Pale de rotor selon la revendication 2, **caractérisée en ce que** les couches de profilés pultrudés côté extérieur de la pale de rotor (21, 21a) de la courroie sont formées plus larges dans chaque section transversale dans la direction longitudinale L de la pale de rotor que les couches de profilés pultrudés côté intérieur de la pale de rotor (23).

5. Pale de rotor selon l'une des revendications 1 à 4, **caractérisée en ce que** les couches de profilés pultrudés (21, 21a, 22, 23) sont d'autant plus étroites dans une section transversale ou présentent au plus la même largeur (B) qu'elles sont placées sur le côté intérieur de la pale de rotor.

6. Pale de rotor selon l'une des revendications 1 à 4, **caractérisée en ce que** les couches de profilés pultrudés (21, 21a, 22, 23) sont formées le long d'une section transversale d'au moins deux profilés pultrudés juxtaposés (211, 212, 213, 214, 221, 222, 223, 231, 232).

7. Pale de rotor selon l'une des revendications précédentes, **caractérisée en ce qu'**un nombre de couches de profilés pultrudés (21, 21a, 22, 23) diminue dans une section transversale dans la direction longitudinale (L) vers l'extrémité côté pointe et/ou vers l'extrémité côté racine de la pale de rotor.

8. Pale de rotor selon l'une des revendications précédentes, **caractérisée en ce que** des arêtes transversales des couches de profilés pultrudés (21, 21a, 22, 23) sont formées chanfreinées en direction du côté extérieur de la pale de rotor à une extrémité côté pointe et/ou côté racine.

9. Pale de rotor selon l'une des revendications précédentes, **caractérisée en ce que** différents profilés pultrudés (211, 212, 213, 214, 221, 222, 223, 231, 232) de la même couche de profilés pultrudés (21, 22, 23) se rapprochent de manière différenciée de la pointe (30).

10. Pale de rotor selon l'une des revendications précédentes, **caractérisée en ce qu'**une couche de profilés pultrudés du côté extérieur de la pale de rotor (21) présente un premier nombre de profilés pultrudés juxtaposés (211, 2123, 213, 214) et qu'une couche centrale de profilés pultrudés (22) présente un second nombre de profilés pultrudés (221, 222, 223) et une couche de profilés pultrudés côté intérieur de la pale de rotor (23) présente un troisième nombre de profilés pultrudés (231, 232) dans une section transversale et le premier nombre est plus grand que le second nombre et le second nombre plus grand que le troisième nombre.

11. Procédé de fabrication d'une pale de rotor avec une courroie, cependant qu'une couche de profilés pultrudés plus étroite côté intérieur de la pale de rotor (23) est appliquée sur une couche de profilés pultrudés plus large côté extérieur de la pale de rotor (21) et la couche de profilés pultrudés plus étroite côté intérieur de la pale de rotor (23) s'étend dans une direction longitudinale (L) vers la pointe (30) au-delà de la couche de profilés pultrudés plus large côté extérieur de la pale de rotor (21) et que des noyaux (36) de composants sandwich sont placés sur des arêtes longitudinales de couches de profilés pultrudés (21, 21a, 22, 23) et les noyaux (36) sont formés avec une épaisseur (D) telle qu'ils amènent une épaisseur de la courroie (20) sur une épaisseur du noyau sandwich d'une coque de pale de rotor, noyau qui entoure la courroie (20).

12. Procédé selon la revendication 11, **caractérisé en ce que** des arêtes transversales de couches de profilés pultrudés sont chanfreinées à l'extrémité côté pointe et/ou à l'extrémité côté racine du rotor.

13. Procédé selon la revendication 11 ou 12, **caractérisé en ce que** la couche de profilés pultrudés plus étroite côté intérieur de la pale de rotor (23) est appliquée sur la couche de profilés pultrudés plus large côté extérieur de la pale de rotor (21) et la couche de profilés pultrudés plus large côté extérieur de la pale de rotor (21) s'étend vers la racine de la pale de rotor (31) à l'encontre de la direction longitudinale (L) au-delà de la couche de profilés pultrudés plus étroite côté intérieur de la pale de rotor (23).
